# EUROPEAN PATENT APPLICATION

(11) **EP 2 549 246 A1**
(43) Date of publication of application: **23.01.2013**
(21) Application number: 11174875.2
(22) Date of filing: 21.07.2011
(51) Int. Cl.: G01H 1/00

(54) **An electronics module for use subsea**

(71) Applicant: Vetco Gray Controls Limited, Bristol BS48 1BS (GB)
(72) Inventor: Stokes, Martin, Newport, South Wales NP20 4LT (GB)
(74) Representative: Emerson, Peter James

(57) **Abstract**

An electronics module (4) for use subsea is provided with a vibration sensor (7) on a printed circuit board (8) in the module, for sensing vibration of the module. The module is typically a subsea electronics module for use in a control system for a subsea hydrocarbon extraction well facility.

## Description

### Field of the Invention

This invention relates to an electronics module for use subsea, for example a subsea electronics module for use in a control system for a hydrocarbon extraction well facility.

### Background of the Invention

In offshore oil and gas production control systems, much of the equipment is mounted on a tree, installed on the seabed. The main equipment of a typical system configuration includes:
a master control station (MCS), which provides the operator interface with subsea equipment and displays the current state of various subsurface equipment, subsea valves and sensor information enabling the operator to control the system;
an umbilical cable, which connects the MCS to the equipment installed on the seabed and incorporates a communication link which carries control signals to the subsurface equipment and transfers information on the status of the subsurface equipment to the MCS;
a subsea control module (SCM), which receives commands from the MCS and controls all the subsea processes, provides the hydraulic power to actuate valves and transmits status data on subsea equipment and sensor data to the MCS;
a subsea electronics module (SEM), housed within the SCM and which is a microprocessor based electronics unit that houses a set of printed circuit boards (PCBs), the functions of which include communication with the MCS (receiving control information from, and transmitting sensor data to, the MCS), interfacing with subsurface sensors and controlling valves and hydraulics; and
a tree installed on the seabed, to which is fitted the subsurface electric and hydraulic equipment needed to control the flow of fluid from the well together with a sensor pack, to determine the state of the Christmas tree equipment, well head components and fluid flowing from the well.

The sensor pack usually includes at least one dedicated vibration sensor which detects vibrations of the tree and equipment mounted on it. Such a sensor requires its own power, communication, cables and connectors to get the data to the SEM. However, the accuracy of this data in relation to the vibrations sensed by actual equipment (for example that housed in the SCM) is not necessarily good.

### Summary of the Invention

According to the present invention from one aspect, there is provided an electronics module for use subsea, the module being provided with a vibration sensor on a printed circuit board in the module, for sensing vibration of the module.

According to the present invention from another aspect, there is provided a method of monitoring vibration of an electronics module used subsea, the method comprising providing the module with a vibration sensor on a printed circuit board in the module to sense vibration of the module.

Typically, the module is a subsea electronics module for use in a control system for a subsea hydrocarbon extraction well facility.

Preferably, the sensor comprises a three-axis acceleration sensor.

Preferably, the sensor is incorporated in an integrated circuit. In this case, integrated circuit typically includes means for amplifying and processing signals from the sensor.
The present invention also comprises a control system for a subsea hydrocarbon extraction well facility, including a module according to the invention, in a subsea control module at a tree of the facility. In this case the system preferably includes means for transmitting data from the sensor to a further location such as a master control station or automatic test equipment.

### Brief Description of the Drawing

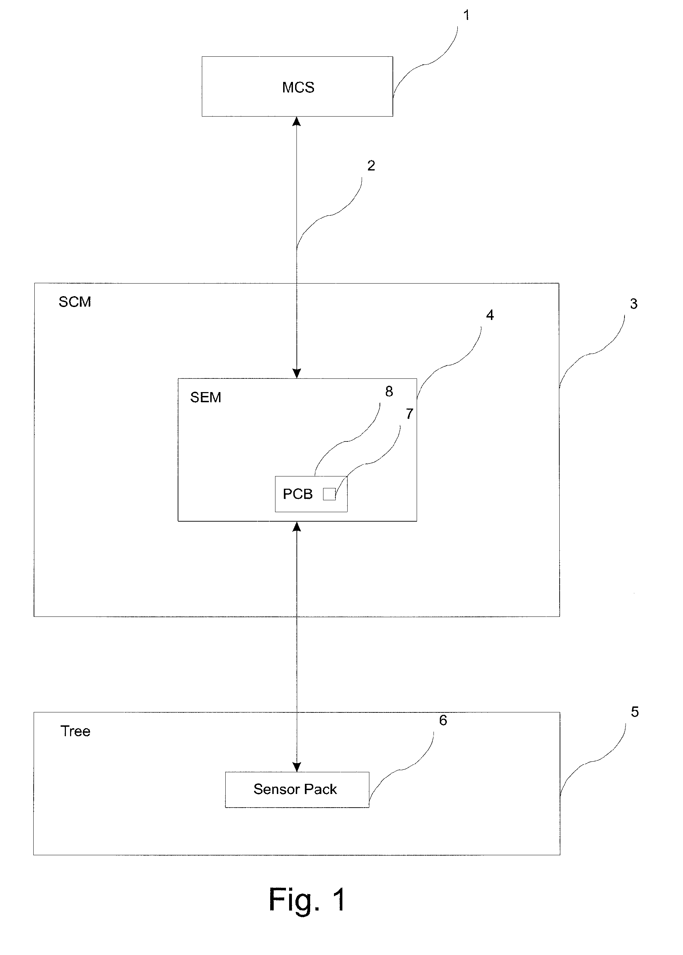

Fig. 1 schematically shows the configuration of a control system for a hydrocarbon extraction well incorporating the invention.

### Description of an Embodiment of the Invention

Fig. 1 shows schematically the above described configuration of a control system for a hydrocarbon extraction well facility but incorporating the invention. Reference numeral 1 designates an MCS; reference numeral 2 designates an umbilical cable; reference numeral 3 designates an SCM; reference numeral 4 designates an SEM; reference numeral 5 designates a tree; and reference numeral 6 designates a sensor pack.

The SCM is a self-contained, sealed unit having a steel casing and a metal baseplate which is fixed to the tree 5 by a series of bolts. The SEM 4, which is itself a heavy metal unit, is securely integrated inside the SCM 3.

However, in contrast to what is described above, the sensor pack 6 does not include the above-mentioned dedicated vibration sensors. Instead, this embodiment of the invention entails mounting an integrated circuit (IC) 7, which incorporates a three-axis vibration sensor, on a PCB 8 fitted into the SEM 4. The IC 7 is mechanically fixed to the PCB 8 by sufficiently rugged electrical connectors and the PCB 8 itself is designed with four faces of mechanical registration and fits into sufficiently rugged electrical connectors fixed to the SEM structure, so that the forces sensed by the vibration sensor of IC 7 will bear a very direct relationship to the forces applied to the SEM itself.

The IC 7, more particularly, is an IC which includes a three-axis accelerometer and which can be mounted on a PCB and interface directly with it. The IC turns sensed mechanical acceleration forces, via an amplifier circuit and an analogue to digital converter in the IC, into a data format, which is transmitted via a communications link (for example in the umbilical cable 2) to the MCS 1 or to automatic test equipment (ATE) during testing and qualification.

This design approach differs from the conventional method of physically mounting a vibration sensor directly on a tree and eliminates the need for external cables and connectors carrying communications and electrical power to the externally mounted vibration sensor and provides a more accurate measurement of equipment vibration.

### Advantages of using the Invention

Some technical advantages enabled by the invention are: removal of the need for a vibration sensor to be mounted in a subsea environment directly on a tree; an increase the overall system reliability due to the elimination of cables and connectors in a subsea environment (which are common points of failure); and the provision of more accurate measurements of equipment (e.g. an SEM) vibration than from a tree mounted sensor.

An additional benefit is that the sensor can be used to improve the environmental stress screening (ESS) of an SEM and also be used for SEM qualification testing. Currently, large external sensors are mounted on to an SEM or cards within it which sensors can artificially skew the results. By having a board mounted sensor, the actual vibration the board is subject can be accurately sensed.

The invention could also be useful in subsea drilling control systems as well as production systems.

Information retrieved can be used to design an improved and more rugged SEM if needed. Some commercial advantages enabled by the invention are: a reduction in equipment cost as external cables and connectors are not needed; improved reliability, resulting in reduction in overall lifecycle costs; the use of more accurate vibration data as part of equipment state of health assessment and improved planned maintenance routines, contributing to reduced costs; and reducing the need and costs of large external sensors for the purpose of SEM testing and qualification.

## Claims

1. An electronics module for use subsea, the module being provided with a vibration sensor on a printed circuit board in the module, for sensing vibration of the module.

2. A module according to claim 1, which is a subsea electronics module for use in a control system for a subsea hydrocarbon extraction well facility.

3. A module according to claim 1 or 2, wherein the sensor comprises a three-axis acceleration sensor.

4. A module according to any preceding claim, wherein the sensor is incorporated in an integrated circuit.

5. A module according to claim 4, wherein the integrated circuit includes means for amplifying and processing signals from the sensor.

6. A control system for a subsea hydrocarbon extraction well facility, including a module according to claim 2 or any of claims 3 to 5 as dependent on claim 2, in a subsea control module at a tree of the facility.

7. A system according to claim 6, including means for transmitting data from the sensor to a further location.

8. A method of monitoring vibration of an electronics module used subsea, the method comprising providing the module with a vibration sensor on a printed circuit board in the module to sense vibration of the module.

9. A method according to claim 8, wherein the module is a subsea electronics module of a control system for a subsea hydrocarbon extraction well facility.

10. A method according to claim 8 or 9, wherein the sensor comprises a three-axis acceleration sensor.

11. A method according to any of claims 8 to 10, wherein the sensor is incorporated in an integrated circuit.

12. A method according to claim 11, wherein the integrated circuit amplifies and processes signals from the sensor.

13. A method according to claim 9 or any of claims 10 to 12 as dependent on claim 9, wherein the module is in a subsea control module at a tree of the facility.

14. A method according to any of claims 8 to 13, including transmitting data from the sensor to a further location.
